(19) Europäisches Patentamt
European Patent Office
Office européen des brevets

(11) EP 1 799 624 B1

(12) # FASCICULE DE BREVET EUROPEEN

(45) Date de publication et mention de la délivrance du brevet:
**09.11.2011 Bulletin 2011/45**

(21) Numéro de dépôt: **05802965.3**

(22) Date de dépôt: **21.09.2005**

(51) Int Cl.:
***C04B 24/30*** (2006.01)

(86) Numéro de dépôt international:
**PCT/FR2005/002342**

(87) Numéro de publication internationale:
**WO 2006/032785 (30.03.2006 Gazette 2006/13)**

(54) **PROCEDE D'INERTAGE D'IMPURETES**

VERFAHREN ZUR INERTISIERUNG VON UNREINHEITEN

METHOD FOR INERTING IMPURITIES

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.09.2004 FR 0409968**
**28.06.2005 FR 0506596**

(43) Date de publication de la demande:
**27.06.2007 Bulletin 2007/26**

(73) Titulaire: **LAFARGE**
**75116 Paris (FR)**

(72) Inventeurs:
- **JACQUET, Alain**
  **F-01600 SAINT DIDIER DE FORMANS (FR)**
- **VILLARD, Emmanuel**
  **F-42320 SAINT-CHRISTO-EN-JAREZ (FR)**
- **WATT, Olivier**
  **F-38110 SAINT JEAN DE SOUDAIN (FR)**

(74) Mandataire: **Mérigeault, Shona**
**Lafarge**
**Département Propriété Industrielle (DPI)**
**95 Rue du Montmurier**
**BP 9**
**38291 Saint Quentin Fallavier Cedex (FR)**

(56) Documents cités:
**EP-A- 0 342 500** **WO-A-85/01935**
**WO-A-98/58887** **FR-A- 1 042 084**
**JP-A- 9 132 444** **JP-A- 9 221 346**
**US-A- 3 738 945** **US-A- 4 158 521**

- **DATABASE WPI Section Ch, Week 199339 Derwent Publications Ltd., London, GB; Class A93, AN 1993-308989 XP002346849 & JP 05 221701 A (DAIICHI KOGYO SEIYAKU CO LTD) 31 août 1993 (1993-08-31)**
- **DATABASE WPI Week 198608 Derwent Publications Ltd., London, GB; AN 1986-052342 XP002330438 & JP 61 006164 A (SHOWA DENKO KK) 11 janvier 1986 (1986-01-11)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne un procédé d'inertage d'impuretés nocives telles que les argiles dans des compositions hydrauliques.

Il est parfois difficile de maîtriser de façon constante les propriétés des compositions hydrauliques. La qualité des matières premières est souvent à l'origine de ces variations. En particulier, il a été constaté que les sables ou plus particulièrement les impuretés contenues dans les sables, telles que les argiles, peuvent générer des fluctuations de propriétés des compositions hydrauliques.

Dans certains cas, ces fluctuations sont dues à une baisse de l'efficacité de plastifiants de type polymère à structure peigne, aussi appelés superplastifiants.

Selon le document WO 98/58887, l'absorption de ces polymères par des argiles gonflantes de type 2 :1 présentes dans les sables est à l'origine de cette baisse d'efficacité.

Il est connu d'éliminer les argiles et autres impuretés des sables par lavage à l'eau. L'eau sale est ensuite traitée par un agent de floculation qui permet d'accélérer la séparation liquide solide et de récupérer ainsi une eau propre. Cette eau est ensuite recyclée pour réaliser à nouveau un lavage des sables. Cette solution est cependant coûteuse en termes d'équipements et nécessite un apport d'eau important. En outre, les sables lavés contiennent généralement du floculant résiduel, lequel présente des effets néfastes sur les propriétés des compositions hydrauliques.

La demande JP 9-221346 propose de neutraliser l'effet négatif du floculant résiduel de type polymère anionique en ajoutant un polymère cationique.

Une autre solution consiste à ne pas séparer les argiles des sables mais à inerter les argiles dans les sables. Le document WO 98/58887 propose l'utilisation d'agents modifiant l'activité de l'argile, par exemple en diminuant sa capacité d'absorption ou en réalisant une pré-absorption. Le document propose entre autres l'utilisation de cations inorganiques ou organiques, dont des (poly)amines quaternaires éventuellement alkoxylées.

Toutefois, les agents décrits ne donnent pas encore entière satisfaction en terme d'efficacité. Ainsi, il est nécessaire d'ajouter un dosage élevé d'agents pour traiter des matériaux à teneur importante en impuretés. Un dosage élevé entraîne des coûts qui rendent le procédé peu intéressant sur le plan industriel.

En outre, contrairement à ce qu'enseigne le document WO 98/58887, des argiles différentes, de type 1 :1 par exemple, peuvent également engendrer une baisse de la qualité des compositions hydrauliques.

Le but de la présente invention est donc de proposer un procédé de préparation de compositions hydrauliques utile pour réduire les effets indésirables liés à la présence d'impuretés nocives telles que les argiles. En particulier, il est recherché un tel procédé qui soit simple, rapide, fiable et peu coûteux et ne nécessite pas d'appareillages sophistiqués.

Ce but est atteint par l'utilisation de polymères cationiques spécifiques. Ainsi, l'invention vise principalement un procédé d'inertage d'argiles dans des sables destinés à la préparation de compositions hydrauliques, comprenant une étape consistant à ajouter à la composition ou à l'un de ses constituants un polymère cationique qui présente une densité de charges cationiques supérieure à 0,5 meq/g et une viscosité intrinsèque inférieure à 1 dl/g.

Dans le cadre de cet exposé, on entend par le terme « polymère » un composé comportant plus de deux unités monomériques, identiques ou différentes, présentant un ordre particulier ou non.

On entend par le terme « cationicité » désigner la densité de charges positives portées par un composé. La cationicité peut être mesurée par titration colloïdale.

On entend par le terme « viscosité intrinsèque » désigner la valeur limite de la viscosité réduite $\eta i/c$ à dilution infinie du polymère. Cette valeur est corrélée au poids moléculaire moyen d'un polymère.

Par le terme « composition hydraulique », on entend définir toute composition présentant une prise hydraulique, et tout particulièrement les mortiers et bétons destinés à l'ensemble des marchés de la construction (bâtiment, génie civil ou usine de préfabrication).

Par le terme « sable », on entend définir des granulats d'une taille granulométrique moyenne comprise entre 0 et 6 mm, de préférence entre 0 et 4 mm. Ils peuvent être de toute nature minérale, calcaire, siliceuse ou silico-calcaire ou autre. Cette définition englobe également des fillers ou d'autres matériaux inorganiques particulaires susceptibles d'être présents dans des compositions hydrauliques.

On entend par le terme « argiles » désigner des silicates d'aluminium et/ou de magnésium, notamment les phyllosilicates à structure en feuillets, typiquement espacées d'environ 7 à environ 14 Angströms. Ce terme vise toutefois aussi des argiles d'autres types, notamment les argiles amorphes. Parmi les argiles rencontrées fréquemment dans les sables peuvent être mentionnées notamment la montmorillonite, l'illite, la kaolinite, la muscovite et la chlorite. Les argiles peuvent être de type 2 :1 mais aussi de type 1 :1 (kaolinite) ou 2 :1 :1 (chlorite).

L'invention repose sur la constatation que les polymères cationiques présentant une densité de charge cationique et un poids moléculaire spécifiques sont particulièrement efficaces pour inerter les impuretés dans les compositions hydrauliques.

Selon l'invention, les polymères cationiques utiles pour optimiser l'effet d'inertant présentent une cationicité supérieure à 0,5 meq/g, de préférence supérieure à 1 meq/g, et en particulier supérieure à 2 meq/g.

Selon l'invention, le polymère cationique présente en outre un poids moléculaire exprimé par une viscosité intrinsèque inférieure à 1 dl/g, de préférence inférieure à 0.8 dl/g, et en particulier inférieure à 0.6 dl/g.

Les polymères cationiques peuvent présenter une structure linéaire, peigne ou ramifiée. De préférence, ils sont de structure linéaire.

Les groupes cationiques peuvent être notamment des groupes phosphonium, pyridinium, sulfonium et amine quaternaire, ces derniers étant préférés. Ces groupes cationiques peuvent être situés dans la chaîne du polymère ou comme groupe pendant.

Un grand nombre de polymères cationiques sont connus en tant que tels.

De tels polymères peuvent être obtenus directement par un des procédés de polymérisation connus, tels que la polymérisation radicalaire, la polycondensation ou la polyaddition.

Ils peuvent également être préparés par modification post-synthétique d'un polymère, par exemple par greffage de groupements portant une ou plusieurs fonctions cationiques sur une chaîne polymérique portant des groupes réactifs appropriés.

La polymérisation est réalisée à partir d'au moins un monomère portant un groupe cationique ou un précurseur adapté.

Les polymères cationiques obtenus à partir de monomères portant des groupes amine et imine sont particulièrement utiles. L'azote peut être quaternisé après polymérisation de manière connue, par exemple par alkylation à l'aide d'un composé alkylant, par exemple par du chlorure de méthyle, ou en milieu acide, par protonation.

Les polymères cationiques contenant des groupes cationiques d'amine quaternaire sont particulièrement appropriés.

Parmi les monomères portant déjà une fonction amine quaternaire cationique, on peut citer notamment les sels de diallyldialkyl ammonium, les (meth)acrylates de dialkylaminoalkyl quaternisés, et les (meth)acrylamides N-substitués par un dialkylaminoalkyl quaternisé.

La polymérisation peut être réalisée avec des monomères non ioniques, de préférence à chaîne courte, comportant 2 à 6 atomes de carbone. Des monomères anioniques peuvent également être présents dans la mesure où ils n'affectent pas les groupements cationiques.

Dans le cadre de la modification de polymères par greffage, on peut citer les polymères naturels greffés, tels que les amidons cationiques.

Avantageusement, le polymère cationique contient des groupes dont le caractère cationique ne se manifeste qu'en milieu acide. Les groupes amines tertiaires, cationiques par protonation en milieu acide, sont particulièrement préférés. L'absence de caractère ionique dans les compositions hydrauliques de type béton ou mortier présentant un pH alcalin permet d'améliorer encore leur robustesse vis-à-vis d'autres composés ioniques, notamment anioniques.

A titre d'exemple, on peut citer des polymères cationiques de la famille des polyvinylamines, lesquels peuvent être obtenus par polymérisation de N-vinylformamide, suivie d'une hydrolyse. Les polyvinylamines quaternisés peuvent être préparés comme décrit dans le brevet US 5,292,441. Sont également appropriés les polymères de type polyéthylèneimine. Ces derniers sont quaternisées par protonation.

Particulièrement préférés sont les polymères cationiques obtenus par polycondensation d'épichlorhydrine avec une mono- ou dialkylamine, notamment la méthylamine ou diméthylamine. Leur préparation a été décrite par exemple dans les brevets US 3,738,945 et US 3,725,312.

Le motif du polymère cationique obtenu par polycondensation de diméthylamine et d'épichlorhydrine peut être représenté comme suit :

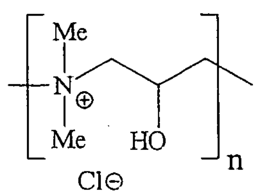

Egalement appropriés sont les polymères de type polyacrylamide modifiés par réaction de Mannich tel que le polyacrylamide N-substitué par un groupe diméthylaminométhyle.

Egalement appropriés sont les polymères cationiques obtenus par polycondensation de dicyandiamide et de formaldéhyde. Ces polymères et leur procédé d'obtention sont décrits dans le brevet FR 1 042 084.

Ainsi, l'invention vise également un procédé d'inertage d'argiles dans des sables destinés à la préparation de compositions hydrauliques, caractérisé en ce que lors de la production du sable, le sable est mis en contact avec un polymère susceptible d'être obtenu par condensation de dicyandiamide avec du formol, éventuellement en présence d'autres composés.

Selon un mode de réalisation préféré, le polymère est susceptible d'être obtenu par condensation de dicyandiamide avec du formol en présence de :

A) un polyalkylène glycol ; et/ou
B) un polycarboxylate polyalkoxylé ; et/ou
C) un dérivé ammonium.

La constitution chimique précise du polymère ainsi obtenu n'est pas connue avec précision. Il sera donc décrit ci-après essentiellement au moyen de son procédé de préparation.

<u>Procédé de préparation</u>

Le polymère est susceptible d'être obtenu par condensation du dicyandiamide avec du formol, éventuellement en présence d'autres composés, notamment d'un polyalkylène glycol (A), d'un polycarboxylate polyalkoxylé (B) et/ou d'un agent de quaternisation (C).

La réaction de condensation entre le dicyandiamide et le formol requiert 2 moles de formol pour 1 mole de dicyandiamide, selon le schéma réactionnel (I) suivant :

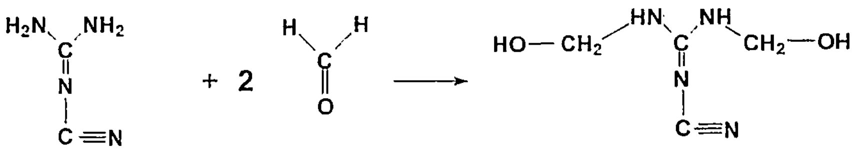

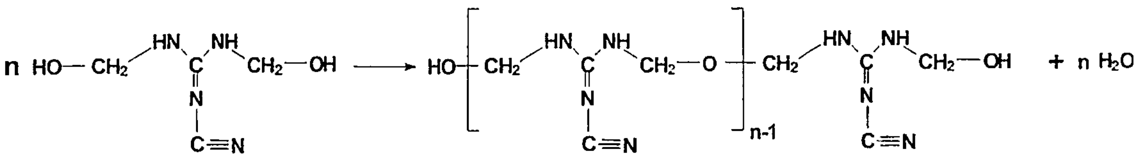

Ainsi, le ratio molaire entre formol et dicyandiamide est de préférence situé dans la plage de 0,8:1 à 4 :1, en particulier de 1 :1 à 3 :1. Un excès molaire supérieur à 4 n'apporte pas d'avantage supplémentaire, mais peut conduire à une prise en masse indésirable.

Il est particulièrement préféré de conduire la réaction en léger excès stoechiométrique de formol, avec un ratio molaire entre formol et dicyandiamide situé dans la plage de 2,2 :1 à 2,8 :1.

De préférence, le polymère est obtenu par condensation de formol avec dicyandiamide en présence de composés additionnels. En effet, cela permet de moduler les propriétés du polymère, notamment sa solubilité dans l'eau et son affinité pour les argiles.

Le polyalkylène glycol (composé A) est de préférence un composé de formule (I) :

$$R^2\text{-O-}[R^1\text{-O}]_n\text{-}R^3$$

dans laquelle :

$R^1$ est un groupe alkyle en $C_1$ à $C_4$, de préférence un groupe éthyle et/ou propyle ;
$R^2$ et $R^3$ sont indépendamment l'un de l'autre un atome d'hydrogène ou un groupe alkyle en $C_1$ à $C_4$, de préférence un groupe méthyle ; et
n est un nombre de 25 à 1000.

A titre d'exemple, il peut s'agir de polyéthylène glycol, de polypropylène glycol, d'un copolymère oxyde d'éthylène/oxyde de propylène ou d'un mélange de ces différents composés. De préférence, il s'agit de polyéthylène glycol.

Le poids moléculaire du composé A va de préférence de 1000 à 35000.

Il a été mis en évidence par des mesures de viscosité que la présence du composé A modifie la structure du polymère formé ainsi que ses performances.

La quantité de composé A mis en oeuvre dans la réaction le cas échéant est en principe inférieure à celle des

réactants principaux dicyandiamide et formol.

Ainsi, le mélange réactionnel contient généralement 0 à 10%, de préférence 0,5 à 3, et tout particulièrement 0,8 à 1 % en poids de composé A.

Le polycarboxylate polyalkoxylé (composé B) est un polymère peigne comportant une chaîne principale hydrocarbonée à laquelle sont liés à la fois des groupes latéraux carboxyliques et des groupes alkoxylés, en particulier des groupes d'oxyde de propylène (PO), des groupes oxyde d'éthylène (EO) et/ou des combinaisons de ceux-ci. Les groupes latéraux peuvent être ioniques ou non ioniques. Il s'agit de préférence d'un composé de formule (II) suivante :

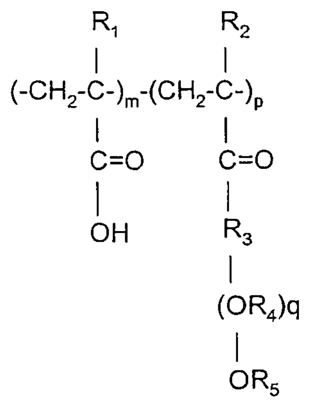

dans laquelle :

- $R^1$ et $R^2$ sont, indépendamment l'un de l'autre, un atome d'hydrogène ou un groupe méthyle ;
- $R^3$ et $R^4$ sont, indépendamment l'un de l'autre, un groupe alkylène en $C_1$ à $C_4$, de préférence un groupe éthylène, propylène ou une de leurs combinaisons ;
- $R^5$ est un atome d'hydrogène ou un groupe alkyle en $C_1$ à $C_4$, de préférence un groupe méthyle ;
- m est un nombre entier de 2 à 100 ;
- p est un nombre entier de 2 à 100 ; et
- q est un nombre entier de 2 à 100.

Le taux d'ester du composé B, donné par le ratio p/(m+p), peut être compris entre 10 à 60%, et en particulier de 20 à 40%.

Avantageusement, le mélange réactionnel contient 0,1 à 10%, de préférence 0,5 à 5, et tout particulièrement 0,5 à 2 % en poids de composé B.

Le dérivé ammonium (composé C) a pour fonction principale d'augmenter le caractère ionique du polymère en apportant des fonctions cationiques. Le caractère ionique du polymère contribue grandement à sa solubilité dans l'eau et à son affinité pour les argiles, et est donc avantageux en vue de l'application envisagée.

De préférence, l'ion ammonium du dérivé ammonium est de formule (IV) suivante :

$$NH(R^6)_3^+$$

dans laquelle
les groupements $R^6$ sont identiques ou différents et signifient H ou un groupement alkyle en $C_1$ à $C_6$.

Parmi les dérivés ammonium appropriés, on peut citer notamment les halogénures d'ammonium tels que le chlorure d'ammonium, le bromure d'ammonium et l'iodure d'ammonium, le sulfate d'ammonium et l'acétate d'ammonium, le chlorure d'ammonium étant préféré.

La quantité de composé C mise en oeuvre peut varier dans de larges proportions. Toutefois, le ratio molaire entre le composé C et la dicyandiamide est de préférence de 1 à 1,5 et tout particulièrement de 1,1 à 1,3. Typiquement, le mélange réactionnel contient 1 à 10%, de préférence 3 à 8%, et tout particulièrement 6 à 8 % en poids de composé C.

La réaction de condensation a lieu dans un solvant approprié, l'eau étant tout particulièrement préférée.

La quantité de solvant dans le mélange réactionnel est choisie de manière à permettre la solubilisation des différents composants. A titre indicatif, le mélange réactionnel peut contenir 10 à 80% en poids, de préférence de 20 à 70% en poids de solvant.

Généralement, il est préférable de limiter la quantité d'eau dans le mélange réactionnel, afin de déplacer l'équilibre de la réaction de condensation vers le produit souhaité. Si l'on souhaite un produit dilué, il est donc avantageux

d'ajouter le complément d'eau après la réaction.

Il peut être intéressant d'ajouter d'autres adjuvants classiques dans les polymérisations, tels que des agents de terminaison moléculaire. Ces composés permettent de contrôler la taille des molécules synthétisées et donc leur masse molaire et d'en diminuer ainsi l'indice de polydispersité. Parmi les agents de terminaison appropriés, on peut citer notamment l'acide sulfamique.

La réaction de condensation se déroule rapidement, généralement en l'espace de 30 minutes à 4 heures environ. La vitesse de la réaction dépend de la température, laquelle peut être comprise entre la température ambiante et le point d'ébullition du mélange réactionnel. De préférence, elle est comprise entre 20 et 95°C, de préférence entre 60 et 70°C. A plus basse température, le temps de réaction sera plus long. Un maintien prolongé à température élevée est toutefois indésirable, car il peut conduire à la dégradation du produit.

Avantageusement, le polymère est mis en oeuvre directement à l'issue de la réaction, sans purification préalable. Il peut donc contenir d'autres produits que le polymère attendu selon le schéma réactionnel (I) indiqué ci-dessus.

Le polymère obtenu est particulièrement utile pour neutraliser les effets néfastes des argiles contenues dans certains sables. Il présente en outre les avantages suivants :

- il permet de réduire la quantité d'eau ou de fluidifiant nécessaire à l'obtention d'une fluidité voulue.
- il est efficace avec différentes argiles ;
- il ne perturbe pas les caractéristiques du mortier en cas de surdosage ;
- il ne perturbe pas les résistances mécaniques, ni à court terme, ni à long terme ;
- il ne présente pas d'effet retardateur de prise ; et
- il est stable dans le temps et résiste à la chaleur et au gel.

Les polymères peuvent être utilisés selon l'application envisagée, sous forme de solide (granulé, bille), liquide ou émulsion.

Le dosage est particulièrement aisé pour des formes liquides. D'autre part, compte tenu du poids moléculaire relativement faible des macromolécules sélectionnées, il est possible d'utiliser des solutions aqueuses à concentrations élevées en polymère sans problème lié à de fortes viscosités. Il est particulièrement intéressant d'utiliser des concentrations en polymère élevées pour réduire les coûts (transport, stockage). La concentration en polymère cationique en solution peut varier, mais est généralement comprise entre 20 et 80% en poids.

Le procédé décrit est utile pour les argiles présentes dans certains constituants des compositions visées. Ces impuretés peuvent affecter les propriétés des compositions, comportant des superplastifiants ou non.

La teneur en impuretés du ou des constituants n'est pas limitée si ce n'est par des considérations économiques. De ce fait, on traitera généralement des matériaux ayant une teneur en argile de 0,5 à 5% en poids.

Le traitement de matériaux contenant des argiles est particulièrement aisé et rapide. En effet, le polymère présente une affinité importante avec les argiles, gonflantes ou non. Ainsi, il suffit en principe de mettre le polymère en contact avec le matériau pour assurer un inertage des argiles contenues dans ceux-ci. Une mise en contact de quelques secondes est généralement suffisante.

Avantageusement, le polymère cationique est mis en contact avec le matériau par pulvérisation du polymère en solution aqueuse.

Dans le cas d'un matériau particulaire, on mélange pendant ou après le traitement afin d'assurer une bonne répartition du polymère et obtenir un matériau traité de manière homogène.

Les argiles sont une source d'impuretés fréquente dans les sables. Aussi, selon un mode de réalisation de l'invention, le sable est traité avec le polymère cationique.

De préférence, le sable est mis en contact avec le polymère par pulvérisation du produit en solution aqueuse sur le sable.

On traite de préférence le sable sec. Ainsi, le sable présente de préférence une humidité inférieure à 10% en poids. En effet, on a constaté que l'efficacité du polymère diminue avec la teneur en eau du sable. Le traitement du sable a donc lieu préférentiellement en carrière.

Afin d'assurer une bonne répartition du polymère et obtenir un sable traité de manière homogène, le sable est de préférence mélangé.

La pulvérisation peut avoir lieu dans un récipient, par exemple dans une caisse à chicanes à la sortie d'un tapis. Ce mode de réalisation assure en outre une faible perte du produit. En variante, il est envisageable de pulvériser une solution du polymère dans un mélangeur placé en sortie de bande. Il peut également être envisagé de préparer un pré-mélange d'une petite quantité de sable avec le produit puis d'ajouter ce pré-mélange au sable.

Le polymère est de préférence appliqué sur le sable en une quantité appropriée pour assurer l'inertage complet des argiles présentes dans le sable et donc éviter le surdosage en superplastifiant.

Toutefois, un traitement partiel peut être envisagé et l'application en quantité supérieure ne détériore pas les propriétés recherchées de la composition hydraulique. Ainsi, il n'est pas nécessaire de doser au préalable la quantité

d'argile présente dans le sable pour déterminer la quantité nécessaire en polymère.

En effet, la quantité de polymère nécessaire pour l'inertage dépend principalement de la teneur en argiles du sable. Elle peut également varier en fonction de la nature des argiles présentes. A titre indicatif, le traitement d'un sable est généralement satisfaisant avec un dosage de 2 à 20%, de préférence 5 à 10% en poids de polymère par rapport au poids en argile sèche dans le sable.

Le polymère cationique peut être ajouté à un ou plusieurs des constituants contenant les impuretés gênantes. Il peut également être ajouté au moment de la préparation de la composition hydraulique, par exemple dans l'eau de gâchage.

Le polymère cationique peut donc être utilisé aussi bien en carrière qu'en centrale à béton.

Le traitement direct des constituants, par exemple en carrière de sable, sera toutefois généralement plus efficace et de ce fait privilégié.

Les constituants ainsi traités peuvent être utilisés de manière habituelle, notamment pour la préparation de compositions à prise hydraulique. Ils sont utiles dans la préparation de compositions hydrauliques présentant des propriétés constantes.

En particulier, les sables ainsi traités sont utiles dans la préparation de compositions hydrauliques, dans lesquelles les argiles peuvent gêner l'efficacité des superplastifiants. Ils peuvent être utilisés de manière habituelle pour la préparation de compositions à prise hydraulique.

On constate que ce procédé de traitement est très versatile. En effet, il donne des résultats très satisfaisants pour différents ciments. En outre, son efficacité n'est pas limitée à une classe d'argile particulière.

Les compositions hydrauliques comprenant des sables à teneur d'argile traités avec le polymère présentent des propriétés rhéologiques comparables avec celles préparées avec des sables exempts d'argile, sans surdosage en superplastifiant, et dont d'un coût inférieur.

Ce procédé permet donc de réduire la quantité d'eau ou de fluidifiant nécessaire à l'obtention d'une fluidité voulue.

En outre, le procédé décrit ne perturbe avantageusement pas les caractéristiques des compositions, même en cas de surdosage. En particulier, on n'observe pas d'effets d'entraînement d'air ou retardateur de prise. Par ailleurs, la mise en oeuvre du procédé décrit n'affecte pas les autres caractéristiques des compositions hydrauliques, comme l'ouvrabilité et son maintien dans le temps, les résistances mécaniques à court et long termes ou le temps de prise.

Le procédé décrit permet de traiter des constituants même fortement pollués. En effet, le polymère cationique décrit est efficace à un faible dosage, et rend ainsi l'inertage des argiles à l'échelle industrielle économiquement viable. Par ailleurs, le polymère cationique est stable dans le temps et résiste à la chaleur et au gel.

Enfin, le procédé ne nécessite pas la mise en place d'un appareillage particulier.

Il en résulte que le procédé décrit peut être efficace dans un large éventail de conditions, pour différents types de compositions hydrauliques et d'argiles.

L'invention sera décrite plus en détail au moyen des exemples suivants, donnés à titre non limitatif.

## EXEMPLES

Les polymères cationiques sont caractérisés au moyen de leur cationicité et poids moléculaire.

a) Cationicité

La cationicité ou densité de charges cationiques (en meq/g) représente la quantité de charges (en mmol) portée par 1g de polymère. Cette propriété est mesurée par titration colloïdale par un polymère anionique en présence d'un indicateur coloré sensible à l'ionicité du polymère en excès.

Dans les exemples ci-après, la cationicité a été déterminée de la manière suivante. Dans un récipient adapté, on introduit 60 ml une solution tampon de phosphate de sodium à 0,001 M - pH6 et 1 ml de solution de bleu d'o-toluidine à 4,1.10-4 M puis 0,5 ml de solution de polymère cationique à doser.

Cette solution est titrée avec une solution de polyvinylsulfate de potassium jusqu'à virage de l'indicateur.

On obtient la cationicité par la relation suivante :

$$\text{Cationicité (meq/g)} = (V_{epvsk} * N_{pvsk}) / (V_{pc} * C_{pc})$$

Dans laquelle :

$V_{pc}$ est le volume de solution du polymère cationique ;

$C_{pc}$ est la concentration de polymère cationique en solution ;
$V_{epvsk}$ est le volume de solution de polyvinylesulfate de potassium; et
$N_{pvsk}$ est la normalité de la solution de polyvinylesulfate de potassium.

b) Viscosité intrinsèque

Les mesures de viscosité intrinsèque des polymères cationiques sont réalisées dans une solution NaCl 3M, avec un viscosimètre capillaire de type Ubbelhode, à 25°C.

On mesure le temps d'écoulement dans le tube capillaire entre 2 repères pour le solvant et des solutions du polymère à différentes concentrations. On calcule la viscosité réduite en divisant la viscosité spécifique par la concentration de la solution de polymère. La viscosité spécifique est obtenue pour chaque concentration, en divisant la différence entre les temps d'écoulement de la solution de polymère et du solvant, par le temps d'écoulement du solvant. En traçant la droite de la viscosité réduite en fonction de la concentration de la solution de polymère, on obtient une droite. L'intersection avec l'ordonnée de cette droite correspond à la viscosité intrinsèque pour une concentration égale à zéro.

c) Préparation d'un mortier

Dans le bol d'un malaxeur Perrier, on prépare un mortier de composition indiquée dans le tableau 1.

On introduit le sable, puis l'eau de pré-mouillage en agitant à faible vitesse (140 tr/min). On laisse reposer pendant 4 minutes avant d'introduire les liants (ciment et filler). Les sables utilisés sont ceux indiqués dans le tableau 1. On malaxe à nouveau pendant 1 minute à petite vitesse puis on ajoute petit à petit l'eau de gâchage additionnée du superplastifiant en 30 secondes. Enfin, on malaxe encore 2 minutes à 280 tr/min.

L'efficacité d'inertage est évaluée par mesure de l'étalement des mortiers ainsi préparés. L'inertant est ajouté au sable. Le plastifiant est ajouté à l'eau de gâchage. Le rapport E/C est maintenu constant pour les différentes séries d'essais.

Tableau 1 :Composition du mortier N°1 (avec superplastifiant)

| | Quantité [kg/$m^3$] |
|---|---|
| Ciment CEM I 52.5 N selon EN 197 | 382 |
| Filler BL 200 (Granicalcium OMYA) | 268 |
| Sable <0,1 mm BL 200 (Granicalcium OMYA) | 103 |
| Sable 0,1 -0,5 mm (Granicalcium OMYA) | 458 |
| Sable 0,5 - 1 mm (Granicalcium OMYA) | 229 |
| Sable 1 - 2,5 mm (Granicalcium OMYA) | 350 |
| Sable 2 - 4 mm (Granicalcium OMYA) | 257 |
| Superplastifiant (Glénium 27 de MBT) | 6 |
| Eau de pré-mouillage | 84 |
| Eau de gâchage | 185 |
| Eau totale | 269 |

Tableau 2 : Composition du mortier N° 2 (sans superplastifiant)

| | Quantité [kg/$m^3$] |
|---|---|
| Ciment CEM I 52.5 N selon EN 197 | 380 |
| Cendres volantes (Carling) | 162 |
| Sable <0,1 mm BL 200 (Granicalcium OMYA) | 254 |
| Sable 0,1 - 0,5 mm (Granicalcium OMYA) | 435 |
| Sable 0,5 -1 mm (Granicalcium OMYA) | 145 |
| Sable 1 - 2,5 mm (Granicalcium OMYA) | 145 |

(suite)

| | Quantité [kg/m$^3$] |
|---|---|
| Sable 2 - 4 mm (Granicalcium OMYA) | 435 |
| Eau de pré-mouillage | 84 |
| Eau de gâchage | 260 |
| Eau totale | 344 |

d) Mesure de l'ouvrabilité du mortier

On mesure l'étalement d'un mortier de la manière suivante.

On remplit un moule sans fond de forme tronconique, de reproduction à l'échelle 0,5 du cône d'Abrams (voir norme NF 18-451, 1981) de dimensions suivantes :

| | |
|---|---|
| diamètre du cercle de la base supérieure | 50 +/- 0,5 mm |
| diamètre du cercle de la base inférieure | 100 +/- 0,5 mm |
| hauteur | 150 +/- 0,5 mm |

d'un mortier fraîchement préparé en trois couches de volume identique, puis on pique entre chaque couche le mortier 15 fois à l'aide d'une tige de piquage en acier de 6 mm de diamètre et à extrémité sphérique. On arase la surface supérieure du cône puis on soulève le cône verticalement. L'étalement est mesuré à intervalles de temps déterminés (5 et 60 min) selon quatre diamètres à 45° avec un pied à coulisse. Le résultat de la mesure d'étalement est la moyenne des quatre valeurs à +/- 1 mm.

Les exemples A, B, C et de 1 à 18 sont réalisés avec la formulation de mortier N°1.

**EXEMPLES A, B et C (exemples de comparaison)**

Afin d'évaluer l'effet néfaste des argiles dans les compositions hydrauliques, on compare l'ouvrabilité d'un mortier préparé avec un sable sans argile (Exemple A), et avec 1 % en poids par rapport au poids de sable de montmorillonite et kaolinite, respectivement (Exemples B et C).

Les résultats sont rassemblés dans le tableau 3 ci-dessous. On constate tout d'abord que les argiles ont un effet néfaste sur l'étalement. Ces essais mettent par ailleurs en évidence que la kaolinite a un effet néfaste, bien que moins prononcé que la montmorillonite.

**EXEMPLE 1**

On prépare un polymère cationique par condensation de dicyandiamide (DCDA) et de formol comme suit.

Dans un réacteur en émail muni d'un thermostat et d'un agitateur, on introduit 20,3 parties en poids d'eau, 11,7 parties en poids de chlorure d'ammonium, 18,2 parties en poids de dicyandiamide, puis 48,8 parties en poids de formol (solution aqueuse à 37% en poids) à température ambiante.

On chauffe le mélange à 95°C en agitant pendant deux heures. Le produit obtenu présente un extrait sec d'environ 48%. Avant stockage, le produit est dilué à 20% d'extrait sec.

Le polymère obtenu présente une cationicité de 2,5 meq/g et une viscosité intrinsèque de 0,06 dl/g.

On prépare ensuite un mortier comme indiqué sous le paragraphe (c), mais avec un sable additionné de 1 % en poids par rapport au poids de sable de montmorillonite et en ajoutant le polymère obtenu après l'eau de pré-mouillage.

On mesure l'étalement à 5 et à 60 minutes après préparation du mortier comme indiqué au paragraphe (d). Un dosage de 8 % en poids calculé en polymère sec par rapport au poids d'argile de polymère cationique permet d'atteindre l'étalement du mortier sans argile. Les résultats sont rassemblés dans le tableau 3 ci-dessous.

Tableau 2 :

| Exemple | Cationicité [meq/g] | IV [dl/g] | Dosage (%pds polymère sec / pds argile) | Etalement à 5 min (mm) | Etalement à 60 min (mm) | Impureté (%pds / pds de sable) |
|---|---|---|---|---|---|---|
| A | - | - | - | 320 | 320 | - |

(suite)

| Exemple | Cationicité [meq/g] | IV [dl/g] | Dosage (%pds polymère sec / pds argile) | Etalement à 5 min (mm) | Etalement à 60 min (mm) | Impureté (%pds / pds de sable) |
|---|---|---|---|---|---|---|
| B | - | - | - | 185 | 145 | 1 % montmorillonite |
| C | - | - | - | 255 | 255 | 1 % kaolinite |
| 1 | 2.5 | 0.06 | 8 | 315 | 315 | 1 % montmorillonite |
| 2 | 2.5 | 0.06 | 8 | 315 | 310 | 1 % kaolinite |
| 3 | 7,3 | 0.04 | 5.5 | 315 | 320 | 1 % montmorillonite |
| 4 | 7,3 | 0.04 | 5.5 | 320 | 315 | 1 % kaolinite |
| 5 | 7,3 | 0.04 | 5.5 | 315 | 315 | 2% montmorillonite |
| 6 | 7,3 | 0.07 | 6,5 | 325 | 325 | 1 % montmorillonite |
| 7 | 7,3 | 0.12 | 8 | 320 | 315 | 1% montmorillonite |
| 8 | 6.2 | 0.5 | 8 | 320 | 320 | 1 % montmorillonite |
| 9 | 9.7 | 0.16 | 8 | 310 | 310 | 1 % montmorillonite |
| 10 | - | - | 15 | 195 | - | 1 % montmorillonite |
| 11 | - | - | 15 | 260 | - | 1 % kaolinite |
| 12 | - | - | 18 | 185 | - | 1 % montmorillonite |
| 13 | - | - | 18 | 255 | - | 1 % kaolinite |
| 14 | - | - | 15 | 210 | - | 1 % montmorillonite |
| 15 | - | - | 15 | 265 | - | 1 % kaolinite |
| 16 | - | - | 15 | Sans effets | | 1 % montmorillonite |
| 17 | - | - | 18 | Sans effets | | 1 % kaolinite |
| 18 | - | - | 15 | Sans effets | - | 1 % montmorillonite |

**EXEMPLE 2**

On répète l'exemple 1, sauf à remplacer la montmorillonite ajoutée au sable par de la kaolinite.

Les résultats sont rassemblés dans le tableau 3 ci-dessus. On constate que l'étalement du mortier sans argile est atteint avec un dosage de 8 % en poids calculé en polymère sec par rapport au poids d'argile de polymère cationique.

**EXEMPLE 3**

On répète l'exemple 1, sauf à ajouter à titre de polymère cationique de la polyamine épichlorhydrine - diméthylamine (EPI-DMA) (FL-2250 de chez SNF).

Les résultats sont rassemblés dans le tableau 3 ci-dessus.

L'étalement du mortier sans argile est atteint avec un dosage de 5,5 % en poids de polymère cationique calculé en polymère sec par rapport au poids d'argile. Comparé à l'exemple 1, ce polymère cationique, présentant une densité cationique plus élevée associée à une plus faible viscosité intrinsèque, est efficace à un dosage nettement inférieur.

## EXEMPLE 4

On répète l'exemple 3, sauf à remplacer la montmorillonite ajoutée au sable par de la kaolinite.

Les résultats sont rassemblés dans le tableau 3 ci-dessus. L'étalement du mortier sans argile est obtenu avec un dosage de 5,5 % en poids calculé en polymère sec par rapport au poids d'argile du polymère cationique. Ainsi, les effets néfastes de la kaolinite disparaissent avec un dosage de polymère cationique équivalent à celui utilisé dans le cas de la montmorillonite.

## EXEMPLE 5

On répète l'exemple 3, sauf à ajouter 2 % en poids de montmorillonite au lieu de 1 %.

Les résultats sont rassemblés dans le tableau 3 ci-dessus. Le dosage de 5,5 % en poids calculé en polymère sec par rapport au poids d'argile permet d'inerter même une teneur de 2 % en poids de montmorillonite.

## EXEMPLE 6

On répète l'exemple 3, sauf à remplacer le polymère cationique par une polyamine épichlorhydrine - diméthylamine (EPI-DMA) de masse moléculaire supérieure (FL-2350 de chez SNF).
Les résultats sont rassemblés dans le tableau 3 ci-dessus. On atteint l'étalement du mortier sans argile avec un dosage de 6,5 % en poids de polymère cationique calculé en polymère sec par rapport au poids d'argile. Ce dosage est supérieur à celui pour le polymère utilisé dans les exemples précédents, de masse moléculaire plus faible.

## EXEMPLE 7

On répète l'exemple 6, sauf à remplacer le polymère cationique par le même polymère de masse moléculaire supérieure (polyamine épichlorhydrine - diméthylamine (EPI-DMA) (FL-2550 de chez SNF)).

Les résultats sont rassemblés dans le tableau 3 ci-dessus. On atteint l'étalement du mortier sans argile avec un dosage de 8 % en poids de polymère cationique calculé en polymère sec par rapport au poids d'argile. Ce dosage est supérieur à celui pour le polymère utilisé dans l'exemple précédent, de masse moléculaire plus faible.

## EXEMPLE 8

On répète l'exemple 1, sauf à remplacer le polymère cationique par du chlorure de Poly(diallyldimethyl) ammonium (PDDC) (FL-4440 de chez SNF).

Les résultats sont rassemblés dans le tableau 3 ci-dessus. On obtient un étalement équivalent à celui obtenu pour un sable sans argile avec un dosage de 8 % en poids de polymère, calculé en polymère sec par rapport au poids d'argile.

Comparé à l'exemple 1, ce polymère cationique, présentant une densité cationique plus élevée associée à une viscosité intrinsèque plus élevée, est efficace à un dosage équivalent.

## EXEMPLE 9

On répète l'exemple 1, sauf à ajouter à titre de polymère cationique de la polyéthylèneimine acidifiée (Lupasol G35 de chez BASF).

Les résultats sont rassemblés dans le tableau 3 ci-dessus. On constate qu'un étalement équivalent à celui obtenu pour un sable sans argile est atteint avec un dosage de 8 % en poids de polymère cationique calculé en polymère sec par rapport au poids d'argile.

Comparé à l'exemple 1, ce polymère cationique, présentant une densité cationique plus élevée associée à une viscosité intrinsèque plus élevée, est efficace à un dosage équivalent.

## EXEMPLE 10 (exemple de comparaison)

On répète l'exemple 1, sauf à remplacer le polymère cationique par du nitrate de calcium.

Les résultats sont rassemblés dans le tableau 3 ci-dessus. Même un dosage de 15 % en poids par rapport au poids d'argile ne permet pas d'atteindre l'étalement obtenu pour un sable sans argile.

**EXEMPLE 11 (exemple de comparaison)**

On répète l'exemple 10, sauf à remplacer la montmorillonite par de la kaolinite.
Les résultats sont rassemblés dans le tableau 3 ci-dessus. Même un dosage de 15 % en poids par rapport au poids d'argile de nitrate de calcium ne permet pas d'atteindre l'étalement obtenu pour un sable sans argile.

**EXEMPLE 12 (exemple de comparaison)**

On répète l'exemple 1, sauf à remplacer le polymère cationique par du bromure de cétyltriméthylammonium (CTB).
Les résultats sont rassemblés dans le tableau 3 ci-dessus. Même un dosage de 18 % en poids par rapport au poids d'argile ne permet pas d'atteindre l'étalement obtenu pour un sable sans argile.

**EXEMPLE 13 (exemple de comparaison)**

On répète l'exemple 12, sauf à remplacer la montmorillonite par de la kaolinite.
Les résultats sont rassemblés dans le tableau 3 ci-dessus. Même en dosage de 18 % en poids par rapport au poids d'argile de CTB ne permet pas d'atteindre l'étalement obtenu pour un sable sans argile.

**EXEMPLE 14 (exemple de comparaison)**

On répète l'exemple 1, sauf à remplacer le polymère cationique par du bromure de tetrabutylammonium (TTB).
Les résultats sont rassemblés dans le tableau 3 ci-dessus. Même un dosage de 15 % en poids par rapport au poids d'argile ne permet pas d'atteindre l'étalement obtenu pour un sable sans argile.

**EXEMPLE 15 (exemple de comparaison)**

On répète l'exemple 14, sauf à remplacer la montmorillonite par de la kaolinite.
Les résultats sont rassemblés dans le tableau 3 ci-dessus. Même en dosage de 15 % en poids par rapport au poids d'argile ne permet pas d'atteindre l'étalement obtenu pour un sable sans argile.

**EXEMPLE 16 (exemple de comparaison)**

On répète l'exemple 1, sauf à remplacer le polymère cationique par du polyéthylène glycol (PEG 1000).
Les résultats sont rassemblés dans le tableau 3 ci-dessus. Même un dosage de 15 % en poids par rapport au poids d'argile reste sans effets sur l'étalement.

**EXEMPLE 17 (exemple de comparaison)**

On répète l'exemple 16, sauf à remplacer la montmorillonite par de la kaolinite.
Les résultats sont rassemblés dans le tableau 3 ci-dessus. Même en dosage de 18 % en poids par rapport au poids d'argile reste sans effets sur l'étalement.

**EXEMPLE 18 (exemple de comparaison)**

On répète l'exemple 1, sauf à remplacer le polymère cationique par du hexametaphosphate de sodium.
Les résultats sont rassemblés dans le tableau 3 ci-dessus. Même un dosage de 15 % en poids par rapport au poids d'argile reste sans effets sur l'étalement.
Les exemples D, E, F et de 20 à 24 sont réalisés avec la formulation de mortier N°2.

**EXEMPLES D, E et F (exemples de comparaison)**

On répète les exemples A, B et C, respectivement, sauf à supprimer le superplastifiant.
Les résultats sont rassemblés dans le tableau 4 ci-dessous. On constate tout d'abord que les argiles ont un effet néfaste sur l'étalement, même en l'absence de superplastifiant. L'effet néfaste de la kaolinite est moins prononcé

que celui de la montmorillonite.

**EXEMPLES 20 à 24**

On répète les exemples 1 à 5, sauf à supprimer le superplastifiant.

Les résultats sont rassemblés dans le tableau 4 ci-dessous. Les polymères cationiques permettent d'atteindre les valeurs respectives d'étalement du mortier préparé sans argile. En comparaison, les polymères présentant une cationicité élevée associée à une faible viscosité présentent un dosage plus intéressant.

Tableau 4 :

| Exemple | Cationicité [meq/g] | IV [dl/g] | Dosage (%pds polymère sec / pds argile) | Etalement à 5 min (mm) | Etalement à 60 min (mm) | Impureté (%pds / pds de sable) |
|---|---|---|---|---|---|---|
| D | - | - | - | 200 | 165 | - |
| E | - | - | - | 125 | 100 | 1 % montmorillonite |
| F | - | - | - | 160 | 120 | 1 % kaolinite |
| 20 | 2.5 | 0.06 | 10 | 190 | 160 | 1 % montmorillonite |
| 21 | 2.5 | 0.06 | 10 | 200 | 165 | 1 % kaolinite |
| 22 | 7,3 | 0.04 | 9 | 195 | 160 | 1 % montmorillonite |
| 23 | 7,3 | 0.04 | 9 | 195 | 165 | 1 % kaolinite |
| 24 | 7,3 | 0.04 | 9 | 190 | 155 | 2% montmorillonite |

Les essais mettent en évidence que les polymères ayant une cationicité élevée et un poids moléculaire faible permettent d'inerter de manière efficace les argiles présentes dans les compositions hydrauliques. Par ailleurs, les exemples de comparaison montrent que les composés décrits par l'art antérieur ne sont pas comparables aux polymères cationiques décrits en termes de performance et robustesse.

**Revendications**

1. Procédé d'inertage d'argiles dans des sables destinés à la préparation de compositions hydrauliques, comprenant une étape consistant à ajouter à la composition ou à l'un de ses constituants un polymère cationique présentant une densité de charges cationiques supérieure à 0,5 meq/g et une viscosité intrinsèque inférieure à 1 dl/g, la mesure de la viscosité intrinsèque étant réalisée dans une solution NaCl à 3 mol/L, avec un viscosimètre capillaire de type Ubbelhode, à 25°C.

2. Procédé selon la revendication 1 dans lequel le polymère présente une densité de charges cationiques supérieure à 2 meq/g.

3. Procédé selon la revendication 1 ou 2, dans lequel le polymère présente une viscosité intrinsèque inférieure à 0,6 dl/g.

4. Procédé selon l'une des revendications 1 à 3, dans lequel le polymère cationique est linéaire.

5. Procédé selon l'une des revendications 1 à 4, dans lequel le polymère cationique contient des groupes cationiques dans la chaîne principale.

6. Procédé selon l'une des revendications 1 à 5, dans lequel le polymère cationique comprend des groupes d'amines quaternaires.

**7.** Procédé selon l'une des revendications 1 à 6, dans lequel le polymère est préparé par condensation d'épichlorhydrine avec une dialkylamine.

**8.** Procédé selon la revendication 7, dans lequel la dialkylamine est la diméthylamine.

**9.** Procédé selon l'une des revendications 1 à 6, dans lequel le polymère est susceptible d'être obtenu par condensation de dicyandiamide avec du formol, en présence de :

A) un polyalkylène glycol.

**10.** Procédé selon l'une des revendications 1 à 6 ou 9, dans lequel le polymère est susceptible d'être obtenu par condensation de dicyandiamide avec du formol, en présence de :

C) un polycarboxylate polyalkoxylé.

**11.** Procédé selon l'une des revendications 1 à 6, 9 ou 10, dans lequel le polymère est susceptible d'être obtenu par condensation de dicyandiamide avec du formol en présence de :

C) un dérivé ammonium.

**12.** Procédé selon l'une des revendications 9 à 11, dans lequel le polyalkylène glycol est de formule (I) suivante :

$$R^2\text{-O-}[R^1\text{-O}]_n\text{-}R^3$$

dans laquelle :

$R_1$ est un groupe alkyle en $C_1$ à $C_4$ ;
$R^2$ et $R^3$ sont indépendamment l'un de l'autre un atome d'hydrogène ou un groupe alkyle en $C_1$ à $C_4$ ; et
n est un nombre de 25 à 1000.

**13.** Procédé selon l'une des revendications 9 à 12, dans lequel le ratio molaire entre formol et dicyandiamide est situé dans la plage de 0,8 :1 à 4:1.

**14.** Procédé selon l'une des revendications 9 à 13, dans lequel le polyalkylène glycol est un polyéthylène glycol.

**15.** Procédé selon l'une des revendications 10 à 14, dans lequel le polycarboxylate polyalkoxylé est de formule (II) suivante :

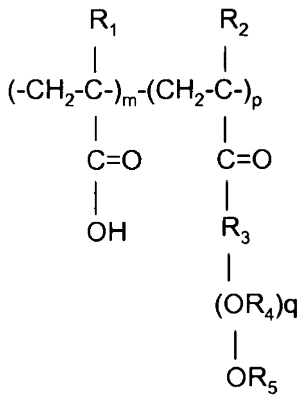

dans laquelle :

$R^1$ et $R^2$ sont, indépendamment l'un de l'autre, un atome d'hydrogène ou un groupe méthyle ;
$R^3$ et $R^4$ sont, indépendamment l'un de l'autre, un groupe alkylène en $C_1$ à $C_4$ ;
$R^5$ est un atome d'hydrogène ou un groupe alkyle en $C_1$ à $C_4$ ;
m est un nombre entier de 2 à 100 ;

p est un nombre entier de 2 à 100 ; et
q est un nombre entier de 2 à 100.

**16.** Procédé selon l'une des revendications 10 à 15, dans lequel le polycarboxylate polyalkoxylé a un taux d'ester de 10 à 60%.

**17.** Procédé selon l'une des revendications 11 à 16, dans lequel l'ion ammonium du dérivé ammonium est de formule (IV) suivante :

$$NH(R^6)_3^+$$

dans laquelle les groupements $R^6$ sont identiques ou différents et signifient H ou un groupement alkyle en $C_1$ à $C_6$.

**18.** Procédé selon l'une des revendications 11 à 17, dans lequel le dérivé ammonium est le chlorure d'ammonium, le sulfate d'ammonium, l'iodure d'ammonium, le bromure d'ammonium, l'acétate d'ammonium.

**19.** Procédé selon l'une des revendications 11 à 18, dans lequel le ratio molaire entre le composé C et la dicyandiamide est de 1 à 1,5.

**20.** Procédé selon l'une des revendications 1 à 19, dans lequel la composition hydraulique est un béton ou un mortier.

**21.** Procédé selon l'une des revendications 1 à 20, dans lequel la composition hydraulique ne contient pas de superplastifiant.

**22.** Procédé selon l'une des revendications 1 à 21, dans lequel le polymère cationique est ajouté par pulvérisation d'une solution aqueuse.

**23.** Procédé selon l'une des revendications 1 à 22 dans lequel le polymère est ajouté en carrière.

**24.** Procédé selon l'une des revendications 1 à 22 dans lequel le polymère est ajouté en centrale à béton.

## Claims

**1.** Method for inerting clays in sands which are intended for the preparation of hydraulic compositions, comprising a step which involves adding to the composition, or to one of the constituents thereof, a cationic polymer which has a density of cationic charges which is greater than 0.5 meq/g and an intrinsic viscosity which is less than 1 dl/gthe measurement of intrinsic viscosity carried out at 25°C in a 3M/l NaCl solution using a capillary viscosimeter of the Ubbelhode type.

**2.** Method according to claim 1, wherein the polymer has a density of cationic charges greater than 2 meq/g.

**3.** Method according to claim 1 or 2, wherein the polymer has an intrinsic viscosity less than 0.6 dl/g.

**4.** Method according to any one of claims 1 to 3, wherein the cationic polymer is linear.

**5.** Method according to any one of claims 1 to 4, wherein the cationic polymer contains cationic groups in the main chain.

**6.** Method according to any one of claims 1 to 5, wherein the cationic polymer comprises groups of quaternary amines.

**7.** Method according to any one of claims 1 to 6, wherein the polymer is prepared by means of condensation of epichlorohydrin with a dialkylamine.

**8.** Method according to claim 7, wherein the dialkylamine is dimethylamine.

**9.** Method according to any one of claims 1 to 6, wherein the polymer is obtainable by condensation of dicyandiamide with formaldehyde, in the presence of:

A) a polyalkylene glycol.

**10.** Method according to any one of claims 1 to 6 or 9, wherein the polymer is obtainable by condensation of dicyandiamide with formaldehyde, in the presence of:

B) a polyalkoxylated polycarboxylate.

**11.** Method according to any one of claims 1 to 6, 9 or 10, wherein the polymer is obtainable by condensation of dicyandiamide with formaldehyde, in the presence of:

C) an ammonium derivative.

**12.** Method according to any one of claims 9 to 11, wherein the polyalkylene glycol has the following formula (I):

$$R^2\text{-}O\text{-}[R^1\text{-}O]_n\text{-}R^3$$

where:

R1 is a C1 to C4 alkyl group ;
R2 and R3 are, independently of each other, a hydrogen atom or a C1 to C4 alkyl group; and
n is a number from 25 to 1000.

**13.** Method according to any one of claims 9 to 12, wherein the molar ratio of formaldehyde to dicyandiamide is in the range from 0.8:1 to 4:1.

**14.** Method according to any one of claims 9 to 13, wherein the polyalkylene glycol is a polyethylene glycol.

**15.** Method according to any one of claims 10 to 14, wherein the polyalkoxylated polycarboxylate has the following formula (II):

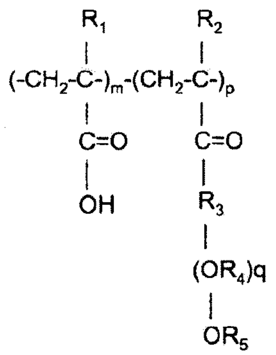

where

R1 and R2 are, independently of each other, a hydrogen atom or a methyl group;
R3 and R4 are, independently of each other, a C1 to C4 alkylene group;
R5 is a hydrogen atom or a C1 to C4 alkyl group ;
m is a whole number from 2 to 100;
p is a whole number from 2 to 100; and
q is a whole number from 2 to 100.

**16.** Method according to any one of claims 10 to 15, wherein the polyalkoxylated polycarboxylate has an ester level of from 10 to 60%.

**17.** Method according to any one of claims 11 to 16, wherein the ammonium ion of the ammonium derivative has the following formula (IV):

$NH(R^6)_3^+$ ,

where the R6 groups are identical or different and represent H or a C1 to C6 alkyl group .

**18.** Method according to any one of claims 11 to 17, wherein the ammonium derivative is ammonium chloride, ammonium sulphate, ammonium iodide, ammonium bromide, ammonium acetate.

**19.** Method according to any one of claims 11 to 18, wherein the molar ratio of the compound C to the dicyandiamide is from 1 to 1.5.

**20.** Method according to any one of claims 1 to 19, wherein the hydraulic composition is a concrete or a mortar.

**21.** Method according to any one of claims 1 to 20, wherein the hydraulic composition does not contain a superplasticiser.

**22.** Method according to any one of claims 1 to 21, wherein the cationic polymer is added by spraying an aqueous solution.

**23.** Method according to any one of claims 1 to 22, wherein the polymer is added at a quarry.

**24.** Method according to any one of claims 1 to 22, wherein the polymer is added at a concrete mixing plant.

**Patentansprüche**

**1.** Verfahren zur Inertisierung von Tonmaterialien in Sand, der zur Herstellung von hydraulischen Zusammensetzungen bestimmt ist, umfassend eine Stufe, die darin besteht, ein kationisches Polymer, das eine Dichte an kationischen Ladungen von über 0,5 meq/g und eine intrinsische Viskosität von unter 1 dl/g aufweist, der Zusammensetzung oder einem ihrer Bestandteile zuzusetzen, wobei die Messung der intrinsischen Viskosität in einer NaCl-Lösung mit 3 mol/l mit einem Kapillarviskosimeter des Ubbelhode-Typs bei 25 °C durchgeführt wird.

**2.** Verfahren gemäß Anspruch 1, wobei das Polymer eine Dichte an kationischen Ladungen von über 2 meq/g aufweist.

**3.** Verfahren gemäß Anspruch 1 oder 2, wobei das Polymer eine intrinsische Viskosität von unter 0,6 dl/g aufweist.

**4.** Verfahren gemäß einem der Ansprüche 1 bis 3, wobei das kationische Polymer linear ist.

**5.** Verfahren gemäß einem der Ansprüche 1 bis 4, wobei das kationische Polymer kationische Gruppen in der Hauptkette enthält.

**6.** Verfahren gemäß einem der Ansprüche 1 bis 5, wobei das kationische Polymer kationische quaternäre Amin-Gruppen enthält.

**7.** Verfahren gemäß einem der Ansprüche 1 bis 6, wobei das Polymer durch Kondensation von Epichlorhydrin mit einem Dialkylamin hergestellt wird.

**8.** Verfahren gemäß Anspruch 7, wobei das Dialkylamin Dimethylamin ist.

**9.** Verfahren gemäß einem der Ansprüche 1 bis 6, wobei das Polymer durch Kondensation von Dicyandiamid mit Formol in Gegenwart von:

A) einem Polyalkylenglykol

erhalten werden kann.

**10.** Verfahren gemäß einem der Ansprüche 1 bis 6 oder 9, wobei das Polymer durch Kondensation von Dicyandiamid mit Formol in Gegenwart von:

C) einem polyalkoxylierten Polycarboxylat

erhalten werden kann.

**11.** Verfahren gemäß einem der Ansprüche 1 bis 6, 9 oder 10, wobei das Polymer durch Kondensation von Dicyandiamid mit Formol in Gegenwart von:

C) einem Ammoniumderivat

erhalten werden kann.

**12.** Verfahren gemäß einem der Ansprüche 9 bis 11, wobei das Polyalkylenglykol die folgende Formel (I) hat:

$$R^2\text{-}O\text{-}[R^1\text{-}O]_n\text{-}R^3 ,$$

worin:

$R^1$ eine $C_1$- bis $C_4$-Alkyl-Gruppe ist;
$R^2$ und $R^3$ unabhängig voneinander ein Wasserstoffatom oder eine $C_1$- bis $C_4$-Alkyl-Gruppe sind und
n eine Zahl von 25 bis 1000 ist.

**13.** Verfahren gemäß einem der Ansprüche 9 bis 12, wobei das Molverhältnis zwischen Formol und Dicyandiamid im Bereich von 0,8:1 bis 4:1 liegt.

**14.** Verfahren gemäß einem der Ansprüche 9 bis 13, wobei das Polyalkylenglykol ein Polyethylenglykol ist.

**15.** Verfahren gemäß einem der Ansprüche 10 bis 14, wobei das polyalkoxylierte Polycarboxylat die folgende Formel (II) hat:

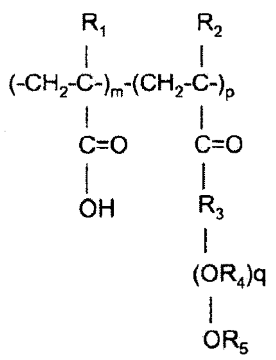

worin:

$R^1$ und $R^2$ unabhängig voneinander ein Wasserstoffatom oder eine Methyl-Gruppe sind;
$R^3$ und $R^4$ unabhängig voneinander eine $C_1$- bis $C_4$-Alkylen-Gruppe sind;
$R^5$ ein Wasserstoffatom oder eine $C_1$- bis $C_4$-Alkyl-Gruppe ist;
m eine ganze Zahl von 2 bis 100 ist;
p eine ganze Zahl von 2 bis 100 ist und
q eine ganze Zahl von 2 bis 100 ist.

**16.** Verfahren gemäß einem der Ansprüche 10 bis 15, wobei das polyalkoxylierte Polycarboxylat einen Ester-Gehalt von 10 bis 60 % hat.

**17.** Verfahren gemäß einem der Ansprüche 11 bis 16, wobei das Ammoniumion des Ammoniumderivats die folgende Formel (IV) hat:

$$NH(R^6)_3^+ ,$$

worin die Gruppierungen $R^6$ identisch oder unterschiedlich sind und H oder eine $C_1$- bis $C_6$-Alkyl-Gruppierung bedeuten.

**18.** Verfahren gemäß einem der Ansprüche 11 bis 17, wobei das Ammoniumderivat Ammoniumchlorid, Ammoniumsulfat, Ammoniumiodid, Ammoniumbromid, Ammoniumacetat ist.

**19.** Verfahren gemäß einem der Ansprüche 11 bis 18, wobei das Molverhältnis zwischen der Verbindung C und dem Dicyandiamid 1 bis 1,5 ist.

**20.** Verfahren gemäß einem der Ansprüche 1 bis 19, wobei die hydraulische Zusammensetzung ein Beton oder ein Mörtel ist.

**21.** Verfahren gemäß einem der Ansprüche 1 bis 20, wobei die hydraulische Zusammensetzung kein Superplastifizierungsmittel enthält.

**22.** Verfahren gemäß einem der Ansprüche 1 bis 21, wobei das kationische Polymer durch Pulverisierung einer wässrigen Lösung zugesetzt wird.

**23.** Verfahren gemäß einem der Ansprüche 1 bis 22, wobei das Polymer im Steinbruch zugesetzt wird.

**24.** Verfahren gemäß einem der Ansprüche 1 bis 22, wobei das Polymer im Fertigbetonwerk zugesetzt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9858887 A
- JP 9221346 A
- US 5292441 A
- US 3738945 A
- US 3725312 A
- FR 1042084